# EUROPEAN PATENT SPECIFICATION

(11) **EP 0 731 623 B1**
(45) Date of publication and mention of the grant of the patent: **12.06.2002**
(21) Application number: 96103332.1
(22) Date of filing: 04.03.1996
(51) Int. Cl.: H05B 3/28, H05B 3/56, H05B 3/14

(54) **Heating device with automatic thermoregulation**
Heizvorrichtung mit automatischer Temperaturreglung
Dispositif de chauffage à thermorégulation automatique

(30) Priority: 08.03.1995 IT MI950448
(43) Date of publication of application: 11.09.1996
(73) Proprietor: Marelli, Ernesto, 23887 Olgiate Molgora (Lecco) (IT)
(72) Inventor: Marelli, Ernesto, 23887 Olgiate Molgora (Lecco) (IT)
(74) Representative: Modiano, Guido, Dr.-Ing.

(56) References cited:
- EP-A- 0 301 706
- US-A- 3 264 595
- US-A- 5 206 485
- PATENT ABSTRACTS OF JAPAN vol. 3, no. 72 (C-049), 21 June 1979 & JP-A-54 043969 (SUMITOMO ELECTRIC IND LTD), 6 April 1979,

## Description

The present invention relates to a heating device with automatic thermoregulation, particularly but not exclusively useful for heating rooms, solid surfaces, liquids, culture media, etcetera.

A heating device of a self-regulating kind can be found in US-A-5 206 485.

A heating device is already known which is constituted by a self-regulating, self-compensating cable, in which an irradiated polymer, or conducting polymer, enriched with graphite microcrystals that make it become a semiconductor, is interposed between two conductors that are supplied by the electrical mains. The conductors are two parallel-connected copper wires, and the conducting polymer is, for example, polyvinyl chloride treated with carbon black. At room temperature or at low temperatures, the graphite-loaded polymer contracts, producing "contact" between the graphite microcrystals, which "close the circuit", heating the cable as a whole. As a consequence of the heating, the cable expands and therefore the graphite microcrystals move apart from one another and therefore "the circuit opens", i.e., the resistance of the cable increases and electric power absorption decreases until thermal equilibrium is reached between the thermal power produced by the cable and the loss due to dissipation by means of the distribution of the heat outside the cable. The resistance of the heating cable can increase to the point that electric power absorption drops to values around zero.

When the electric power is disconnected, the cable cools down, causing a return to the initial conditions, in which if electric power is reconnected, for a few moments electrical consumption is at its maximum level.

This self-regulating cable is commercially available and is used to heat pipes, tanks, roofs, gutters, components, and is also "embedded" in cement when it is used for example to heat driveways or footpaths.

However, this heating device is not free from drawbacks, since it does not allow to achieve uniform heating; for example, it does not provide thermal uniformity in the surfaces to be heated, especially when the geometry of the device is very complicated, and this is a severe drawback, especially when the heated surfaces are used for production, aging, and research lines in the fields of pharmaceutics, food, chemistry, electronics, etcetera.

A principal aim of the present invention is to eliminate the drawbacks described above in conventional self-regulating heating devices, by providing a device that allows the uniform diffusion of heat in all directions, even in the presence of wide surfaces or complicated geometries, without having to use resistive elements with high electrical absorption and without having to apply the resistive element so as to "cover" the entire surface to be heated.

An object of the present invention is to provide a device that allows to produce multipurpose heating surfaces without geometric and dimensional limitations, capable of providing warm surfaces, with automatic thermoregulation (without the need for a thermostat, therefore provided only with a cable and a bipolar plug plus a ground), and capable of operating with an electrical consumption that is inversely proportional to the attained surface temperature.

This aim, these objects, and others are achieved by the heating device according to the present invention as defined in claim 1.

Further preferred embodiments of the present invention are presented in the dependent claims.

Advantageously, said siliceous product is made compact by a curing agent also acting as a hardener.

Conveniently, said siliceous product comprises sand and an epoxy resin.

For example, it is possible to use, as a siliceous product, a sand mix with exothermic reaction that contains sand and an epoxy resin, containing particularly preferably 82.8-83.8% of mineral aggregate by weight, 12-13% of epoxy resin by weight, 3.7-4.7% of amide-amine hardener by weight, and 0.03-0.09% by weight of a pigment. A mix of washed quartz sand, or even quartz-arenite (quartzitic sandstone or siliceous cement, containing 90-95% quartz) can be used as a mineral aggregate.

Examples of adapted epoxy resin are: exothylene, an epoxy resin produced by the reaction of bisphenol A and of epichlorohydrin.

The particular siliceous product used in the present invention, differently from other "embedding" systems, avoids the formation of cracks and of air pockets that do not transmit heat.

The siliceous product used in the present invention can be rendered extremely compact and hard, but without air pockets and not brittle, by adding an amine modified hardener that makes the complex resistant to alkali, acids, and solvents, as well as to water in general, hot and cold.

Examples of amine modified hardeners usable in the present invention are amido-amines, for example amido-amines having a relative density of 0.98, an equivalent weight of 65, a viscosity of 500 to 900 cp (1 cp = 0,001 kg/s/m) at 25°C, and an open cup flash point of 149°C.

Another example of curing agent usable in the present invention is tetraethylene pentamine.

The heating device according to the present invention can be provided with a metal casing of any kind, and said casing can have a smooth surface or a surface provided with fins.

The casing, if made of metal, can be coated with an ornamental material (for example moquette, wood, PVC, thermosetting resin, etcetera).

The casing of the heating device according to the present invention can also be a material other than a metal, such as for example crystal glass, a thermosetting resin, etcetera.

The casing can have any geometry (flat, tubular, polyhedral, straight, curved, or mixed, finned, etcetera).

The heating device according to the present invention can operate by natural radiation or can also distribute the heat by ventilation achieved with a tangential electrical ventilation.

Further characteristics and advantages of the invention will become apparent from the following detailed description of embodiments of the heating device according to the present invention, illustrated only by way of non-limitative example in the accompanying drawings, wherein:
figure 1 is a perspective view of a heating device with automatic thermoregulation according to an embodiment of the present invention, in the form of a heating plate connected to a heating circuit;
figure 2 is a transverse sectional view, taken through the device of figure 1;
figure 3 is a schematic view of a heating device with automatic thermoregulation according to another embodiment of the present invention, in the form of a unit heater with a heating plate that is ventilated with a tangential electric fan;
figure 4 is a schematic view of a heating device with automatic thermoregulation according to a further embodiment of the present invention, in the form of a radiator with diffuser provided with fins;
figure 5 is a perspective view of a heating device with automatic thermoregulation according to an embodiment of the present invention, in the form of a heater that can be immersed in liquids;
figure 6 plots the behavior of the heating cable with automatic thermoregulation and of a heating plate of the present invention.

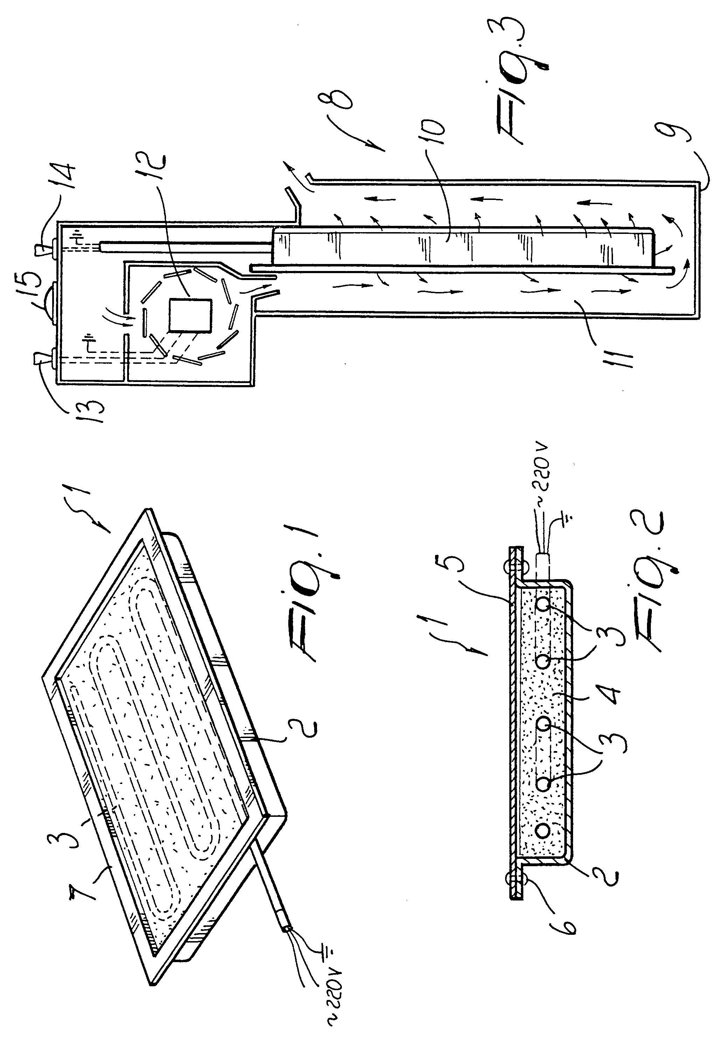

With reference to figures 1 and 2, the device according to the present invention, in the form of a heating plate 1, comprises, in a containment tray 2, a heating cable 3 that is immersed in a mass of siliceous product 4. The containment tray 2 has a surrounding edge 7 adapted for fixing a closure surface 5 by means of rivets 6. The containment tray is made of stainless steel and/or aluminum and/or glass and/or thermosetting resin.

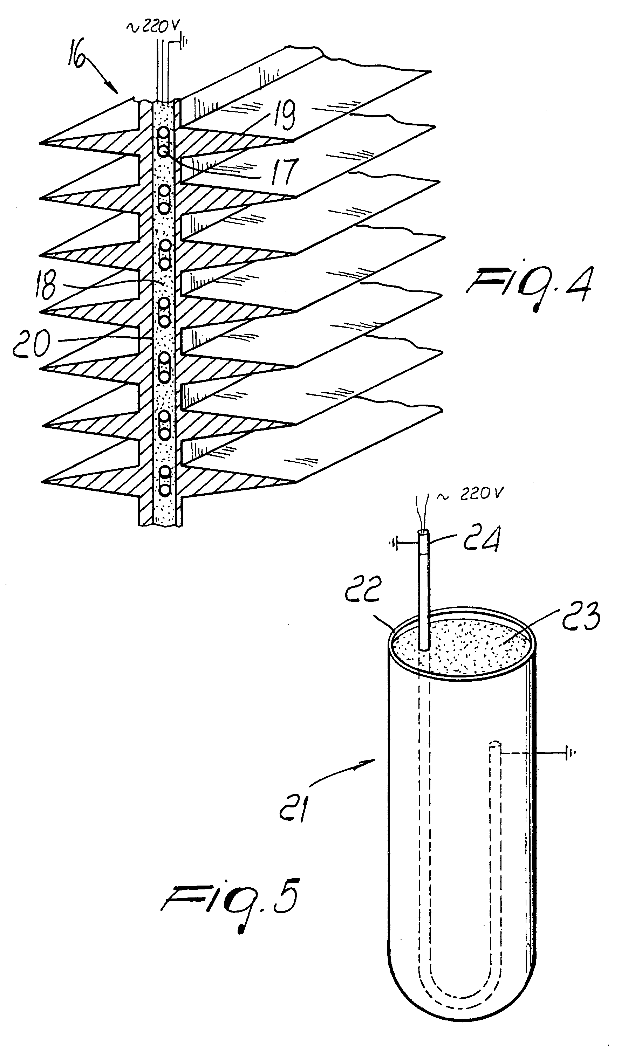

With reference to figure 3, the unit heater 8 with heating plate ventilated by a tangential electric fan according to the present invention comprises, in a containment piece of furniture 9, a heating plate 10 according to the present invention, which is arranged so that an air duct 11 forms between the containment cabinet 9 and the heating plate 10. The heater furthermore comprises a tangential electric fan 12 and is provided with switches for the fan and for the heating plate 13 and 14, and with an indicator light 15.

With reference to figure 4, the device comprises a body 19 provided with fins, said body having an axial duct 20, a mass of siliceous product 18 inside said duct, and a heating cable 17 that is immersed in the mass of siliceous product. The finned diffuser can be made for example of aluminum. This device can be provided with one or more heating circuits and with or without ventilation.

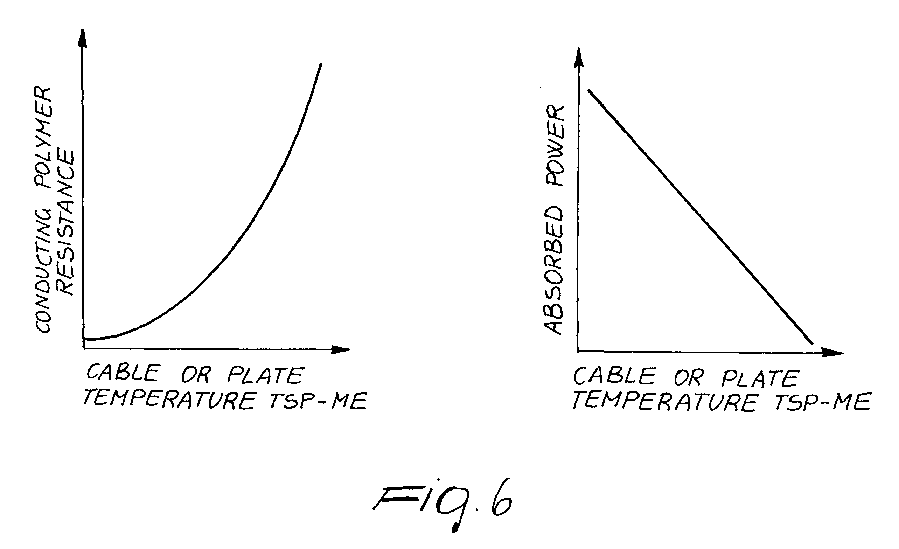

With reference to figure 5, the heater 21 according to the present invention comprises, in an impermeable tubular casing 22, a mass of siliceous product 23 in which a heating cable 24 is immersed. The casing can conveniently be made of metal or thermosetting resin. The mass of siliceous product ensures tightness with respect to liquids even if the casing breaks.

In a particular embodiment of the present invention, the heating device is provided in the form of a heating plate that can contain one or more self-regulating heating circuits, constituted by the above described heating cables. An example is constituted by a plate measuring 25 cm x 60 cm and having a thickness of 2 cm. Such a heating plate radiates both from the front face and from the rear face as well as from the sides. The radiating surface of this plate is therefore 3000 sq cm.

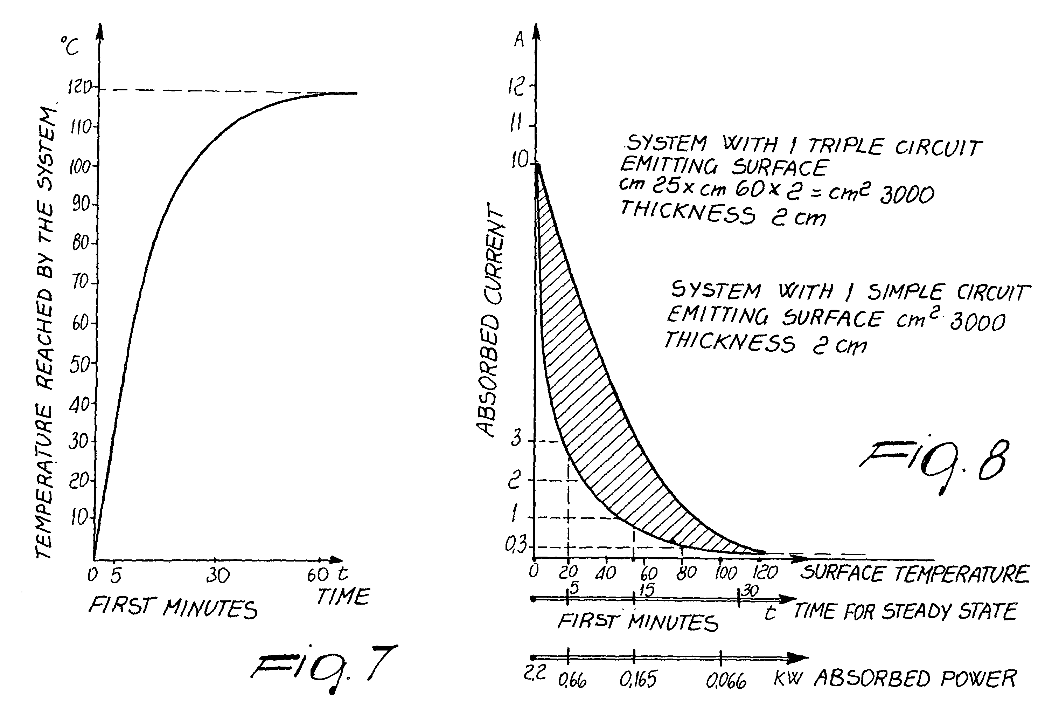

The results of tests carried out by the Applicant by using such a heating plate according to the invention are shown in figures 7 and 8.

Figure 7 is a plot of the variation of the temperature of the plate surface as a function of the time elapsed from the connection of the device to the electric mains.

Figure 8 is a plot of the correlation between the intensity of the current, the temperature of the surface of the heating plate, the time required to reach the steady state, and the power absorbed for a plate having the above mentioned dimensions that comprises one and respectively three heating circuits. The plate that was used has a smooth surface and was not subjected to ventilation during the test. The maximum surface temperature reached during the tests conducted with this plate was 120°C.

In another preferred embodiment of the present invention, the heating device with automatic thermoregulation is provided in the form of a heating plate measuring 0.25 m x 1 m and operating with three heating circuits that can be engaged separately, each one by means of an appropriate switch.

Each one of the three heating elements or circuits is identical to the others. The heating plate being considered, however, has a different heating power with respect to the plate measuring 25 x 60 cm described earlier.

The plate measuring 0.25 m x 1 m was subjected to tests in the following conditions:

The plate being tested was placed in a locked position (and isolated with respect to the container) in an appropriate cell measuring 0.5 x 0.5 x 1 m.

The cell was internally provided with reflecting walls.

The cell was also provided with a fan so that the plate being tested could be subjected to an air stream.

Thermocouples were installed at the inlet and at the outlet of the cell, at the air passages, and a temperature sensor was also placed on the surface of the plate being tested.

Air flow rate and velocity were measured and controlled.

The following parameters were recorded continuously (throughout the test):
-- inlet air temperature
-- outlet air temperature
-- air velocity
-- air flow rate
-- electric power absorbed by the plate.??

When the three heating circuits that operated inside the heating plate being tested were engaged, the following data were measured in particular:
-- absorbed current: 5.3 amps (220 V AC)
-- ambient temperature: 18°C
-- stabilized air flow-rate: 113 m³/h

After 1 hour and 20 minutes, the temperature that could be measured on the surface of the plate being tested was 83.3°C and was found to be stable, and so was the absorbed power (280 W with respect to the initial 1166 W).

It has been possible to observe, with the aid of the instruments, that in a stabilized steady-state condition an efficiency equal to 99% of the supplied power was measured in output.

The same result, i.e., a 99% efficiency, was also achieved by supplying the heating plate being tested with only two of the heating circuits.

The equilibrium temperature depends on the number of heating circuits; the extent of the surface, for an equal number of heating circuits; the geometry of the container that fits over the heating plate; the presence of tangential (or non-tangential) ventilation applied to the heating plate; the material constituting the casing of the heating plate; and the ambient temperature and humidity.

A system with a plurality of heating circuits, all other conditions being equal, usually reaches the temperature in a shorter time.

There is no fixed rule suggesting or forcing a specific number of heating cables, all other conditions being equal.

The choice is a function of the time desired or required to reach maximum temperature equilibrium according to the intended use.

The maximum temperature at which the heating plate must work depends on the intended application. There can be various operating conditions. For example, pens for experimental animals; heating plates for maintaining temperatures of volatile liquids (or temperatures slightly higher than the typical ambient temperature); tubular embodiments (instead of plates) for immersion in liquids for aging processes for wines, liquors, etcetera, and/or for particular kinds of breeding and/or culture, etcetera.

In these cases, the surface of the heating plate and/or of the component, regardless of its geometry, must not reach temperatures above 30 and/or 35 and/or 40 and/or 50°C.

A similar situation can occur when the heating plate and/or the component are used to heat furniture such as benches, seats, backs, footrests, bookshelves, billiard table surfaces, etcetera. In these cases, the temperature must not exceed 25-30 degrees Celsius (°C) and must be uniform and constant.

The controlled temperatures according to the values indicated in the examples are achieved as a function of the length and number of heating cables in relation to the surface size and to the geometry of the article (plate and/or other item).

In this situation, the absorbed power was 220 W and the surface temperature was 73°C.

By using the same cables, in the same conditions, but without a covering of siliceous product according to the present invention, the temperature increase is limited only to the surface occupied by the cable, with values decreasing immediately beyond the surface occupied by the cable.

The uniform diffusion of the heat in all directions and without "blind zones" (a diffusion that is not subjected to particular initial stabilization inertias) occurs because the used specific siliceous product, that accommodates the heating cable, transmits the heat by "thermal conduction" and/or "tip effect", promoted by the polyhedral geometry of the microcrystals that ultimately compose the adopted specific siliceous product. Heat distribution occurs by virtue of the microcrystals that compose the siliceous product, in which each microcrystal transfers the heat (in all directions) to the microcrystals surrounding it, and each one continues the action of the first one, even if it is spaced from the source. Accordingly, the used heating cable can cover only part of the surface that constitutes the heating plate.

The heating device according to the present invention is highly insensitive to variations in ambient temperature, owing to the ability of the siliceous product to maintain heat.

The typical feature of the used heating cable does not allow overheating and therefore makes the invention fully reliable and gives it an unlimited life; its reliability and durability are ensured most of all by the specific nature of the siliceous product being used and by the structure acting as a casing.

The heating device with automatic thermoregulation according to the present invention results in:
-- at least 10 times lower electric power absorption
-- execution with any geometry at will, with no limitations, not even dimensional ones
-- possibility of sealed construction, submersible in liquids in general without requiring particular casings, due to the characteristics of the siliceous product, which is an important element of the system
-- absence of thermoregulations
-- possibility of continuous operation from -80 to +120°C.
-- absence of diathermic liquids or fluids that convey the produced heat
-- absence of connections to water or gas lines
-- minimal essential specific thickness (1.8 cm)
-- efficiency regarding the yielded heat energy/used electric power ratio between 99% and 99.7%
-- applicability in any environment and/or situation without modifications
-- no maintenance
-- substantially unlimited life
-- independent and immediate operating availability

Some examples of use of the heating device with automatic thermoregulation according to the present invention are as follows:
-- heating of rooms (convectors) to be applied to walls or fitted therein
-- heating of surfaces where "maintenance heat" is required
-- inclusion in furniture and furnishings (chairs, benches, backs, kitchens, beds)
-- provision of large thermal surfaces for communities, hotels, boarding houses, schools, clinics, etcetera for the thermal conservation of food, linen, etcetera
-- independent heating, without management requirements, for holiday homes and/or apartments in general
-- independent heating of bungalows, caravans, prefabricated houses for building yards, etcetera
-- heating of individual work stations in offices and shops, workshops, laboratories, indoor markets, etcetera
-- heating of pedestrian walkways (stairs, landings, etcetera) subject to freezing
-- conditioning of laboratories
-- conditioning of offices
-- conditioning of high-altitude mountain shelters (where an electric network or electric power generators are provided, in any case availability of 220 V AC single-phase power at 50/60 Hz)
-- heating elements (maintenance heat) for liquids in general etcetera
-- heating elements for culture media etcetera
-- heating elements for pens of experimental animals etcetera.

The above is a non-limitative illustration of the present invention. Several variations and modifications may be performed without abandoning the scope of protection of the invention and its true inventive concepts.

## Claims

1. Heating device, comprising at least one heating cable (3), said heating cable being constituted by two conductors and by an electrically conducting polymer containing graphite microcrystals interposed between the two conductors, said polymer containing said microcrystals becoming less conducting when irradiated by heat, said device being **characterized in that** said at least one heating cable is surrounded by a microcrystalline siliceous product (4), in a compact form.

2. Heating device according to claim 1, **characterized in that** said siliceous product is rendered compact by a curing agent.

3. Heating device according to claim 1, **characterized in that** said siliceous product comprises sand and an epoxy resin.

4. Heating device according to claim 1, **characterized in that** said siliceous product comprises 88.5% sand and 11.5% epoxy resin.

5. Heating device according to claim 3 or claim 4, **characterized in that** said epoxy resin is chosen from the group constituted by epoxy resins derived from the reaction of bisphenol A and epichlorohydrin with an epoxy equivalent weight of 185-196, a viscosity of 12-16 kg/s/m (12000-16000 cp) at 25°C, a relative density 25/25 of 1.16, an open cup flash point of 249°C; a maximum color Garder 3.

6. Heating device according to claim 2, **characterized in that** said curing agent is an amido-amine.

7. Heating device according to claim 2, **characterized in that** said siliceous product comprises 82.8-83.8% by weight of a mineral aggregate, 12-13% by weight of epoxy resin, 3.7-4.7% by weight of curing agents, and 0.03-0.09% by weight of a pigment, said mineral aggregate containing washed sand and quartz-arenite.

8. Heating device according to one of the preceding claims, **characterized in that** said conducting polymer is polyvinyl chloride treated with carbon black.

9. Heating device according to one of the preceding claims, **characterized in that** it is covered with a casing (22) made of a material chosen from the group comprising metals, reinforced concrete glass, and thermosetting resins.

10. Heating device according to one of the preceding claims, **characterized in that** at the maximum operating temperature the power absorption decreases, reaching values around zero.

## Patentansprüche

1. Heizvorrichtung, mit zumindest einem Heizkabel (3), das Heizkabel wird durch zwei Leiter und ein elektrisch leitendes Polymer gebildet, das Graphitmikrokristalle enthält, die zwischen den beiden Leitern angeordnet sind, das die Mikrokristalle enthaltende Polymer wird weniger leitfähig, wenn es hilzebestrahlt wird, die Vorrichtung ist **dadurch gekennzeichnet, dass** das zumindest eine Heizkabel von einem mikrokristallinen, siliziumdioxidhaltigen Produkt (4) in einer kompakten Form umgeben ist.

2. Heizvorrichtung nach Anspruch 1, **dadurch gekennzeichnet, dass** das siliziumdioxidhaltige Produkt durch einen Vernetzer verdichtet ist.

3. Heizvorrichtung nach Anspruch 1, **dadurch gekennzeichnet, dass** das siliziumdioxidhaltige Produkt Sand und einen Epoxiharz aufweist.

4. Heizvorrichtung nach Anspruch 1, **dadurch gekennzeichnet, dass** das siliziumdioxidhaltige Produkt 88,5 % Sand und 11,5 % Epoxiharz aufweist.

5. Heizvorrichtung nach Anspruch 3 oder nach Anspruch 4, **dadurch gekennzeichnet, dass** der Epoxiharz aus einer Gruppe ausgewählt wurde, die durch Epoxiharze gebildet sind, die aus einer Reaktion von Bisphenol A und Epichlorhydrin mit einem Epoxiäquivalentgewicht von 185 bis 196, einer Viskosität von 12 bis 16 kg/s/m (12000 - 16000 cp) bei 25 °C, einer relativen Dichte 25/25 von 1.16, einem Flammpunkt im offenen Tiegel von 249°C; mit einer maximalen Gardnerfarbzahl 3.

6. Heizvorrichtung nach Anspruch 2, **dadurch gekennzeichnet, dass** der Vernetzer ein Amidoamin ist.

7. Heizvorrichtung nach Anspruch 2, **dadurch gekennzeichnet, dass** das siliziumdioxidhaltige Produkt 82,8 bis 83,8 Gewichtsprozent eines Mineralaggregates, 12 bis 13 Gewichtsprozent eines Epoxiharzes, 3,7 bis 4,7 Gewichtsprozent Vernetzer und 0,03 bis 0,09 Gewichtsprozent eines Pigmentes umfasst, das mineralische Aggregat enthält gewaschenen Sand und Quarzsand.

8. Heizvorrichtung nach einem der voranstehenden Ansprüche, **dadurch gekennzeichnet, dass** das leitende Polymer mit Ruß behandeltes Polyvinylchlorid ist.

9. Heizvorrichtung nach einem der voranstehenden Ansprüche, **dadurch gekennzeichnet, dass** sie mit einer Ummantelung (22) abgedeckt ist, die aus einem Material hergestellt wurde, ausgewählt aus der Gruppe enthaltend Metalle, Glasstahlbeton und hitzebehärtbare Kunststoffe.

10. Heizvorrichtung nach einem der voranstehenden Ansprüche, **dadurch gekennzeichnet, dass** bei der maximalen Betriebstemperatur die Energieaufnahme abnimmt, Werte um 0 erreichend.

## Revendications

1. Dispositif de chauffage comportant au moins un câble de chauffage (3), ledit câble de chauffage étant constitué de deux conducteurs et d'un polymère électriquement conducteur contenant des microcristaux en graphite interposés entre lesdits deux conducteurs, ledit polymère contenant les microcristaux devenant moins conducteur lorsqu'il est irradié par de la chaleur, ledit dispositif étant **caractérisé en ce que** ledit câble de chauffage est entouré d'un produit siliceux microcristallin (4) ayant une forme compacte.

2. Dispositif de chauffage selon la revendication 1, **caractérisé en ce que** ledit produit siliceux est rendu compact par un agent de cuisson.

3. Dispositif de chauffage selon la revendication 1, **caractérisé en ce que** ledit produit siliceux comporte du sable et une résine époxy.

4. Dispositif de chauffage selon la revendication 1, **caractérisé en ce que** ledit produit siliceux comporte 88,5 de sable et 11,5 % de résine époxy.

5. Dispositif de chauffage selon la revendication 3 ou 4, **caractérisé en ce que** ladite résine époxy est choisie parmi le groupe constitué des résines époxy dérivées de la réaction du bisphénol A et d'épichlorohydrine ayant un poids équivalent en époxy de 185 à 196, une viscosité de 12 à 16 kg/s/m (12000 à 16000 cp) à 25°C, une densité relative 25/25 de 1,16, un point éclair en vase ouvert de 249°C, une couleur maximale de 3 unités Garder.

6. Dispositif de chauffage selon la revendication 2, **caractérisé en ce que** ledit agent de cuisson est une amido-amine.

7. Dispositif de chauffage selon la revendication 2, **caractérisé en ce que** ledit produit siliceux comporte de 82,8 à 83,8 % en poids d'un agrégat minéral, de 12 à 13 % en poids d'une résine époxy, de 3,7 à 4,7 % en poids d'agents de cuisson, et de 0,03 à 0,09 % en poids d'un pigment, ledit agrégat minéral contenant du sable lavé et une quartz-arénite.

8. Dispositif de chauffage selon l'une des revendications précédentes, **caractérisé en ce que** ledit polymère conducteur est du chlorure de polyvinyle traité à l'aide de noir de carbone.

9. Dispositif de chauffage selon l'une des revendications précédentes, **caractérisé en ce qu'**il est recouvert d'un carter (22) constitué d'un matériau choisi parmi le groupe comportant des métaux, du verre à béton armé, et des résines thermodurcissables.

10. Dispositif de chauffage selon l'une des revendications précédentes, **caractérisé en ce qu'**à la température de fonctionnement maximale, l'absorption de puissance diminue, en atteignant des valeurs proches de zéro.
